# FASCICULE DE BREVET EUROPEEN

(11) **EP 3 084 134 B1**
(45) Date de publication et mention de la délivrance du brevet: **28.03.2018**
(21) Numéro de dépôt: 14830831.5
(22) Date de dépôt: 18.12.2014
(51) Int. Cl.: F01D 5/14, F01D 11/00

(54) **PIÈCE OU ENSEMBLE DE PIÈCES DE TURBOMACHINE ET TURBOMACHINE ASSOCIÉE**
STRÖMUNGSMASCHINENBAUTEIL ODER -BAUTEILGRUPPE UND ZUGEHÖRIGE STRÖMUNGSMASCHINE
TURBOMACHINE COMPONENT OR COMPONENT ASSEMBLY AND CORRESPONDING TURBOMACHINE

(30) Priorité: 18.12.2013 FR 1362927
(43) Date de publication de la demande: 26.10.2016
(73) Titulaire: Snecma, 75015 Paris (FR)
(72) Inventeur: MANIERE, Vianney, Christophe, Marie, F-77550 Moissy-cramayel Cedex (FR); VOLLEBREGT, Matthieu, Jean Luc, F-77550 Moissy-Cramayel Cedex (FR); LOUPY, Gaëtan, Jean, Marie, F-77550 Moissy-Cramayel Cedex (FR); MAUCLAIR, Paul, Henri, Joseph, F-77550 Moissy-Cramayel Cedex (FR)
(74) Mandataire: Regimbeau
(86) Numéro de dépôt international: PCT/FR2014/053437
(87) Numéro de publication internationale: WO 2015/092306

(56) Documents cités:
- EP-A1- 1 927 723
- EP-A2- 2 194 232
- JP-A- S5 254 808

## Description

### DOMAINE TECHNIQUE GENERAL

La présente invention concerne une pièce de turbomachine comprenant des pales et une plateforme présentant une surface non-axisymétrique.

### ETAT DE L'ART

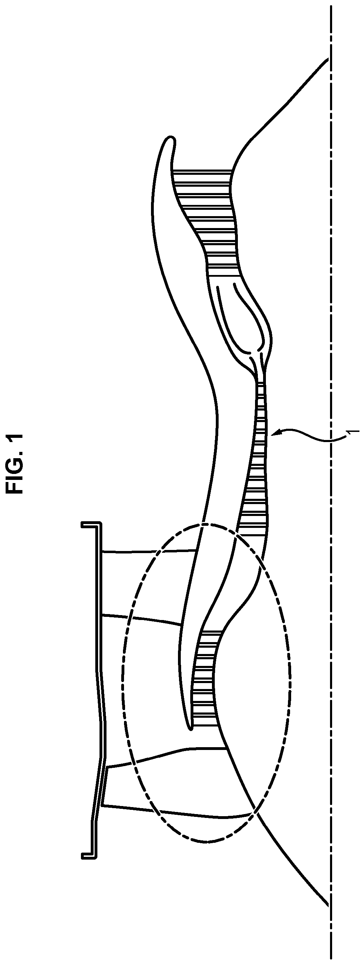

La nécessité d'amélioration constante des performances des équipements, en particulier aéronautiques, par exemple des rotors de turboréacteurs (c'est-à-dire l'ensemble formé d'un moyeu sur lequel sont fixées des aubes s'étendant radialement, tel que visible sur la **figure 1**), a aujourd'hui imposé l'utilisation d'outils informatiques de modélisation.

Ces outils permettent d'aider à concevoir des pièces en optimisant de façon automatisée certaines de leurs caractéristiques par l'exécution d'un grand nombre de calculs de simulation.

La recherche d'un optimum géométrique aéromécanique et/ou acoustique sur les rotors ou stators conduit aujourd'hui à l'obtention de moyeux présentant une paroi localement non-axisymétrique (c'est-à-dire qu'une coupe selon un plan perpendiculaire à l'axe de rotation n'est circulaire) au niveau de la veine, c'est-à-dire l'ensemble des canaux entre les aubes pour l'écoulement de fluide (en d'autres termes les sections inter-aubes), au vu des conditions particulières qui y règnent. La veine non-axisymétrique définit une surface globalement annulaire d'un espace tridimensionnel (une « tranche » du moyeu).

Toutefois, on constate que ces géométries restent perfectibles, en particulier au niveau des étages de compresseur de la turbomachine. En effet, les raccords pale/paroi restent le siège d'écoulements secondaires (et donc de pertes importantes dans les étages de compresseur), du fait de la proximité de la paroi sur laquelle une couche limite importante se développe depuis l'amont du compresseur, et du gradient de pression établi de l'extrados d'une pale vers l'intrados de la pale adjacente.

La combinaison de ces éléments génère une remontée de fluide à faible énergie sur l'extrados de chaque pale et se traduit en aval par des tourbillons importants, sources de pertes. On observe aussi une sur-déviation proche paroi et une sous-déviation au-dessus.

Il serait souhaitable de disposer d'une nouvelle géométrie permettant de corriger ces problèmes afin d'améliorer les performances en termes de rendement des équipements, mais sans dégrader ni l'opérabilité et ni la tenue mécanique. Le document EP 1 927 723 A1 divulgue l'art antérieur le plus proche.

### PRESENTATION DE L'INVENTION

La présente invention propose ainsi une pièce ou ensemble de pièces de turbomachine selon la revendication 1. La ou les ailettes de cette géométrie particulière non-axisymétrique de la surface de la pièce préviennent le décollement aérodynamique.

L'opérabilité des étages de compresseur et le rendement en sont d'autant améliorés.

Selon d'autres caractéristiques avantageuses et non limitatives :
- chaque ailette présente une largeur comprise entre 5% et 20% de la distance entre l'intrados de la première pale et l'extrados de la deuxième pale ;
- chaque ailette présente un ratio hauteur sur largeur compris entre 0.3 et 1.3 ;
- chaque ailette présente une hauteur croissante en parcourant l'ailette de la position d'attaque à la position de fuite ;
- chaque ailette présente une trace correspondant à la ligne moyenne de squelettes des première et deuxième pales ;
- la position de fuite associée à chaque ailette est située à entre 50% et 105% de longueur relative de ladite corde de pale ;
- les positions d'attaque et de fuite associées à chaque ailette sont chacune situées à une distance de l'extrados de la deuxième pale comprise entre 10% et 55% de la distance entre l'intrados de la première pale et l'extrados de la deuxième pale ;
- la surface définit deux ou trois ailettes côte à côte ;
- la plateforme comprend une première partie de plateforme à partir de laquelle s'étend la première pale et une deuxième partie de plateforme à partir de laquelle s'étend la deuxième pale, un raccord entre lesdites première et deuxième parties de plateforme formant l'ailette ;
- la surface est limitée par un premier et un deuxième plan extrémal, la surface étant définie par au moins une courbe de construction de classe C¹ représentant chacune la valeur d'un rayon de ladite surface en fonction d'une position entre l'intrados de la première pale et l'extrados de la deuxième pale selon un plan sensiblement parallèle aux plans extrémaux disposé entre la position d'attaque et la position de fuite de chaque ailette ;
- chaque courbe de construction a été modélisée via la mise en oeuvre par des moyens de traitement de données d'étapes de :
   (a) Paramétrisation de la courbe de construction en tant que courbe de classe C¹ représentant la valeur du rayon de ladite surface en fonction d'une position entre l'intrados de la première pale et l'extrados de la deuxième pale, la courbe étant définie par :
      - Deux points de contrôle extrémaux, respectivement sur chacune des deux pales entre lesquelles ladite surface s'étend ;
      - Au moins un point de contrôle intermédiaire situé entre les points de contrôle extrémaux ;
      - Au moins une spline ;
      la paramétrisation étant mise en oeuvre selon un ou plusieurs paramètres définissant au moins un des points de contrôle ;
   (b) Détermination de valeurs optimisées desdits paramètres de ladite courbe.
- la plateforme présente une forme annulaire le long de laquelle sont régulièrement disposées une pluralité de pales ;
- la plateforme présente la même surface non-axisymétrique entre chaque paire de pales consécutives ;
- la pièce est une roue à aubes ou un redresseur de compresseur.

Selon un deuxième aspect, l'invention concerne une turbomachine comprenant une pièce selon le premier aspect.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 précédemment décrite représente un exemple de turbomachine ;
- la figure 2 représente un mode de réalisation préféré d'une pièce selon l'invention;
- la figure 3 représente schématiquement la géométrie d'une ailette d'une pièce selon l'invention ;
- la figure 4 représente schématiquement une structure pour réaliser une ailette d'une pièce selon l'invention ;
- les figures 5a-5c représentent des résultats d'observation des lignes de courant et de frottement pour trois géométries.

### DESCRIPTION DETAILLEE

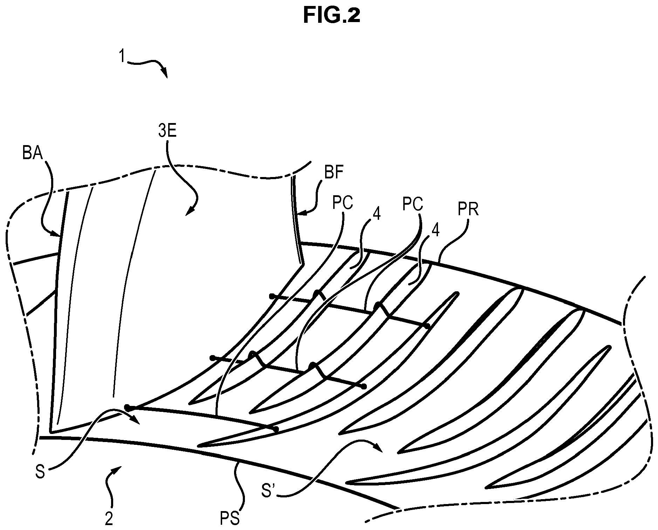

En référence à la **figure 2****,** la présente pièce 1 (ou ensemble de pièces si elle n'est pas monobloc) de turbomachine présente au moins deux pales consécutives 3E, 3I et une plateforme 2 à partie de laquelle s'étendent les pales 3E, 3I. Le terme plateforme est ici interprété au sens large et désigne de façon générale tout élément d'une turbomachine sur lequel des pales 3E, 3I sont aptes à être montées (en s'étendant radialement) et présentant une paroi interne/externe contre laquelle l'air circule.

En particulier, la plateforme 2 peut être monobloc (et ainsi supporter l'ensemble des pales de la pièce 1), ou formée d'une pluralité d'organes élémentaires chacun supportant une unique pale 3E, 3I (un « pied » de la pale) de sorte à constituer une aube du type de celle représentée par la figure 2 En particulier, la plateforme 2 peut comprendre une partie de plateforme 2I, 2E pour chacune des pales 3E, 3I dans un mode de réalisation avantageux qui sera décrit plus loin.

En outre, la plateforme 2 peut délimiter une paroi radialement intérieure de la pièce 1 (le gaz passe autour) en définissant un moyeu, et/ou bien une paroi radialement extérieure de la pièce 1 (le gaz passe à l'intérieur, les pales 3I, 3E s'étendent vers le centre) en définissant alors un carter de la pièce 1. Il est à noter qu'une même pièce 1 peut comprendre simultanément ces deux types de plateforme 2. On comprendra que comme expliqué la pièce 1 peut être de nombreux types, notamment un étage de rotor (DAM (« Disque Aubagé Monobloc »), ou roue à aubes, selon le caractère intégral ou non de l'ensemble) ou un étage de stator (redresseur fixe, ou à aubes mobiles VSV (« Variable Stator Vane »)), en particulier au niveau de l'entrée du flux secondaire (redresseur OGV, « Outlet Guide Vane »), voir figure 1 déjà introduite.

Dans la suite de la présente description, on prendra à ce titre l'exemple d'un étage d'OGV, mais l'homme du métier saura transposer aux autres types de pièces 1 (par exemple à un « fan », en d'autres termes une soufflante, ou à un étage du compresseur Basse Pression).

### Surface de plateforme

La présente pièce 1 se distingue par une géométrique particulière (non-axisymétrique) d'une surface S d'une plateforme 2 de la pièce 1, dont on observe un exemple de modélisation avantageuse sur la figures 2.

La surface S s'étend entre deux pales 3E, 3I (dont une seule est visible sur la figure 2 pour mieux observer la surface S. On repère néanmoins la trace de la pale manquante dans chaque cas), qui la limitent latéralement.

La surface S est en effet une partie d'une surface plus importante définissant une forme sensiblement torique autour de la pièce 1. Dans l'hypothèse (mais non limitative) d'une périodicité dans la circonférence de la pièce 1 (c'est-à-dire si les pales 3E, 3I sont identiques et réparties uniformément), la paroi est constituée d'une pluralité de surfaces identiques dupliquées entre chaque couple de pales 3E, 3I.

Les surfaces S' également visibles sur la figure 2 sont ainsi une duplication de la surface S.

Toujours sur cette figure, est visible un trait partageant chacune des surfaces S et S' en deux moitiés. Cette structure correspond à un mode de réalisation dans lequel la plateforme 2 est composée d'une pluralité d'organes élémentaires chacun étant un pied supportant une pale 3E, 3I avec laquelle il forme une aube. Chacun de ces pieds de pale (nommés « parties de plateformes » dans la suite de la présente description) s'étend ainsi de part et d'autres de la pale 3E, 3I, d'où le fait que la surface S comprend des surfaces juxtaposées associées à deux pieds de pale distincts. La pièce 1 est alors un ensemble d'au moins deux aubes (ensemble pale/pied de pale) juxtaposées. On parle de plateformes « intégrées », par opposition à des plateformes « rapportées », c'est-à-dire indépendantes des pales (la surface S peut alors être constituée d'un seul élément). On comprendra que la présente invention n'est limitée à aucune structure particulière la plateforme 2.

La surface S est limitée en amont par un premier plan extrémal, le « Plan de séparation » PS et en aval par un deuxième plan extrémal, le « Plan de raccord » PR, qui définissent chacun un contour axisymétrique, continu et de dérivée continue (la courbe correspondant à l'intersection entre chacun des plans PR et PS et la surface de la pièce 1 dans son ensemble est fermée et forme une boucle). La surface S présente une forme sensiblement parallélogrammique et s'étend continument entre les deux plans extrémaux PS, PR, et les deux pales 3E, 3I d'un couple de pales consécutives. L'une des pales de ce couple de pales est la première pale 3I, ou pale d'intrados. Elle présente en effet son intrados à la surface S. L'autre pale est la deuxième pale 3E, ou pale d'extrados. Elle présente en effet son intrados à la surface S. Chaque « deuxième pale » 3E est la « première pale » 3I d'une surface voisine telle que la surface S' dans la figure 2 (puisque chaque pale 3E, 3I présente un intrados et un extrados).

La surface S est avantageusement définie par des courbes de construction PC, appelées également « Plans de construction ». Chaque courbe de construction PC est une courbe de classe C¹ représentant la valeur d'un rayon de ladite surface S en fonction d'une position entre l'intrados de la première pale 3I et l'extrados de la deuxième pale 3E selon un plan sensiblement parallèle aux plans extrémaux PS, PR.

Par rayon on entend la distance entre un point de la surface et l'axe de la pièce 1. Une surface axisymétrique présente ainsi un rayon constant.

Une courbe de construction PC est typiquement une spline, c'est à dire une courbe polynomiale paramétrique, parmi lesquelles on peut citer préférentiellement les courbes de Bézier.

### Ailette

La surface S non-axisymétrique de la présente pièce est remarquable en ce qu'elle définit au moins une pluralité d'ailettes 4 à section sensiblement triangulaire s'étendant en aval d'un bord d'attaque (BA) de chacune des pales 3I, 3E. De façon préférée, il y a deux ou trois ailettes 4 sur la veine (la figure 2 représente une solution à deux ailettes 4, les différentes possibilités seront décrites plus loin).

Le fait de disposer des ailettes entre deux pales d'une pièce est connu (voir par exemple les demandes de brevets EP1927723, JP6022002, US4023350). Mais les ailettes connues sont généralement des « lamelles » plates. En effet ces ailettes connues (qui sont en général nombreuses) n'ont pour rôle que d'agir comme barrière pour le flux incident, et générer des tourbillons.

Les présentes ailettes 4 visent à améliorer la déviation du flux incident, et à éviter la remontée de fluide le long de l'extrados. Par là, les ailettes 4 améliorent le rendement et l'opérabilité d'un étage de compresseur, et préparent un fluide plus propre/homogène pour les étages qui suivent.

En particulier, il apparait une hausse de la vorticité au bord d'attaque des présentes ailettes 4, mais plus en aval la réduction du tourbillon de passage l'emporte et l'intensité des vortex diminue de jusqu'à 6%. L'ajout d'au moins une ailette 4 diminue ainsi le décollement au niveau du bord de fuite. C'est la conséquence directe de l'effet de redressement des ailettes sur l'écoulement au niveau de la couche limite. Moins d'énergie vient percuter l'extrados de la deuxième pale 3E, ainsi les lignes de courant peuvent plus difficilement monter. La hauteur de décollement peut être réduite de moitié (voir plus loin pour la comparaison de différents modes de réalisation).

Dans tous les cas, les ailettes 4 présentent une section sensiblement triangulaire, c'est-à-dire qu'elles présentent deux faces obliques se rejoignant sur une arête dorsale, soit par un angle, soit par un raccord tangent. Les deux faces elles-mêmes se raccordent à la veine (reste de la surface S) soit par un angle soit par un raccord tangent. Chaque ailette 4 peut en outre présenter des extrémités biseautées telles qu'on le voit sur la figure 2.

De façon préférée, chaque ailette 4 présente une trace (c'est-à-dire une trajectoire) correspondant à la ligne moyenne de squelettes des première et deuxième pales 3I, 3E. Le plus souvent, toutes les pales ont le même squelette, c'est pourquoi toutes les ailettes 4 et pales 3I, 3E présentent une courbure similaire, mais on comprendra que l'invention n'est pas limitée à ce cas.

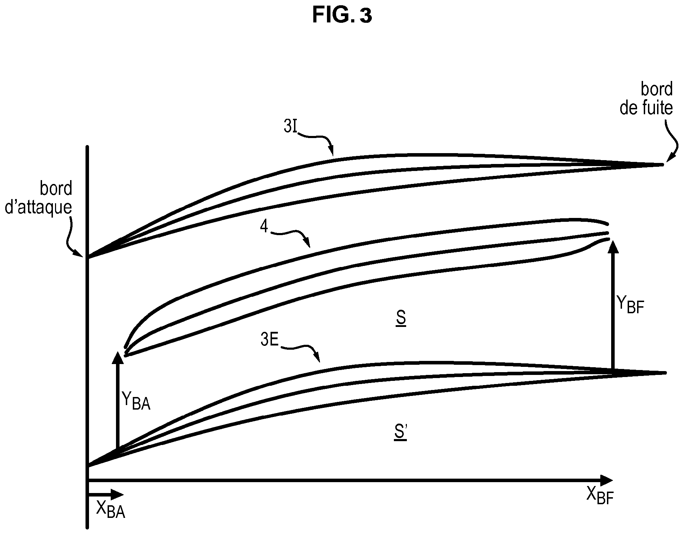

Cela apparait en particulier à la **figure 3** (les squelettes des pales 3I, 3E et la trace de l'ailette 4 sont les lignes médianes représentées pour chacun des éléments), qui représente de façon schématique une ailette 4 isolée.

Il est à noter que les ailettes 4 offrent un autre avantage : elles peuvent être utilisées comme échangeur thermique pour faciliter le refroidissement de la pièce 1.

### Dimensions et position

Les ailettes 4 présentent avantageusement une largeur comprise entre 5% et 20% (préférentiellement entre 10% et 15%) de la distance entre l'intrados de la première pale 3I et l'extrados de la deuxième pale 3E. La largeur considérée ici est la largeur maximale de la base de l'ailette 4 (qui est sensiblement constante, hormis au niveau des biseaux d'attaque et de fuite). Cette largeur et la distance entre l'intrados de la première pale 3I et l'extrados de la deuxième pale 3E s'apprécient préférentiellement selon des plans parallèles aux plans extrémaux PS, PR (en d'autres termes selon les courbes de constructions mentionnées précédemment), lesquels sont visibles sur la figure 2, et représentés verticalement sur la figure 3.

De façon préférée, chaque ailette 4 présente un ratio hauteur sur largeur compris entre 0.3 et 1.3, ce qui aux dimensions classiques des étages de compresseurs donne une hauteur comprise entre 1 mm et 25 mm.

Chaque ailette 4 est en particulier définie par deux points extrémaux : une position d'attaque et une position de fuite sur la surface S, entre lesquelles l'ailette 4 s'étend (en particulier en suivant le squelette des pales 3I, 3E).

La position d'attaque est définie dans le référentiel de la figure 3 par des coordonnées X_{BA} et Y_{BA}, et la position de fuite par des coordonnées X_{BF} et Y_{BF}. Ces coordonnées sont respectivement une coordonnée axiale et une coordonnée azimutale de la position.

La première coordonnée X désigne une position (axiale) le long d'une corde de pale 3I, 3E s'étendant d'un bord d'attaque BA à un bord de fuite BF de la pale 3I, 3E, exprimée en longueur relative (en d'autres termes, à X=0 correspond à un alignement sur les bords d'attaque BA et X=1 correspond à un alignement avec les bords de fuite BF des pales 3I, 3E).

Et de façon préférée, ces positions sont telles que :
- la position (axiale) d'attaque est située à entre 5% et 35% (préférentiellement entre 15% et 25%) de longueur relative de la corde de pale 3I, 3E (i.e. *X_{BA}* ∈ [0.05, 0.35]), et
- la position (axiale) de fuite située à entre 50% et 105% (préférentiellement entre 70% et 85%) de longueur relative de la corde de pale 3I, 3E (i.e. *X_{BF}* ∈ [0.5,1.05]).

On note que l'ailette 4 n'est pas forcément comprise entre les bords d'attaque BA et de fuite BF des pales 3I, 3E et peut s'étendre axialement en aval du bord de fuite BF.

La deuxième coordonnée Y désigne une position (azimutale) le long d'une largeur de canal s'étendant de l'extrados de la deuxième pale 3E à l'intrados de la première pale 3I, exprimée en longueur relative (en d'autres termes, à Y=0 correspond à un point contre l'extrados de la deuxième pale 3E et Y=1 correspond à un point contre l'intrados de la première pale 3I).

Et de façon préférée, ces positions sont telles que chacune des positions d'attaque et de fuite associées à une ailette 4 est située à une distance de l'extrados de la deuxième pale 3E comprise entre 10% et 55% de la largeur de canal (i.e. *Y_{BA}, Y_{BF}* ∈ [0.1,0.55]). La ou les ailettes 4 peuvent donc être centrées dans la veine, mais sont préférentiellement plus proche de l'extrados de la deuxième pale 3E.

De façon générale, plus une ailette 4 est éloignée de l'extrados de la deuxième pale 3E, plus la position (axiale) d'attaque de ladite ailette 4 est éloignée du bord d'attaque BA des pales 3I, 3E. En d'autres termes, en partant de l'extrados, les ailettes sont étagées avec X_{BA} croissant.

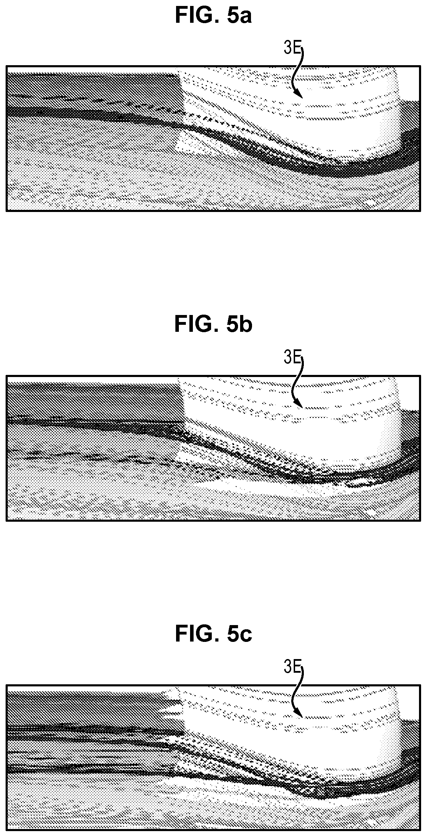

Cette géométrie permet une amplification progressive de l'effet de déviation du flux incident, ce qui est souhaitable dans la mesure où la remontée de fluide observée est progressive le long de l'extrados et que la migration du fluide s'effectue de l'intrados vers l'extrados (voir la figure 5a qui sera décrite plus loin). L'étagement des ailettes 4 améliore ainsi l'uniformité du flux à proximité du fond de la veine et réduit encore la hauteur de décollement.

De façon encore préférée, chaque ailette 4 présente en plus une hauteur croissante en parcourant l'ailette 4 de la position d'attaque à la position de fuite, i.e. à position axiale croissante. La progressivité de la hauteur des ailettes 4, corrélée à l'étagement des ailettes 4, améliore encore l'uniformité du flux à proximité du fond de la veine et la réduction de la hauteur de décollement. La hauteur des ailettes peut notamment varier linéairement ou quadratiquement avec la position axiale.

On note que la hauteur maximale des ailettes 4 peut diminuer avec l'éloignement à l'extrados de la deuxième pale 3E, de sorte à amplifier l'effet conjoint de l'étagement et de la hauteur variable des ailettes 4.

### Nombre d'ailettes

Les meilleurs résultats sont obtenus pour deux ailettes 4. Il est souhaitable de ne pas dépasser trois ailettes 4.

A deux ailettes, celles-ci peuvent être disposées au milieu de chacune des parties 2I, 2E de plateforme 2 (comme l'on voit sur la figure 2), mais de façon préférée les ailettes 4 peuvent être plutôt du côté extrados de la veine. Par exemple, une première ailette peut être associée à des positions azimutales *Y_{BA}, Y_{BF}* ∈ [0.2, 0.25], et une deuxième ailette associée à des positions azimutales *Y_{BA}, Y_{BF}* ∈ [0.5, 0.55].

Dans le cas où une des ailettes 4 est disposée au milieu de la veine (positions d'attaque et de fuite associées à l'ailette 4 situées à une distance de l'extrados de la deuxième pale 3E à environ 50% de la largeur de canal), il est possible d'utiliser la structure de la plateforme 2 pour reconstituer cette ailette 4. Ainsi, si la plateforme 2 comprend une première partie de plateforme 2I à partir de laquelle s'étendent la première pale 3I et une deuxième partie de plateforme 2E à partir de laquelle s'étendent la deuxième pale 3E, le raccord entre les deux parties 2I, 2E de la plateforme 2 peut être prévu pour correspondre à la trace de l'ailette 4.

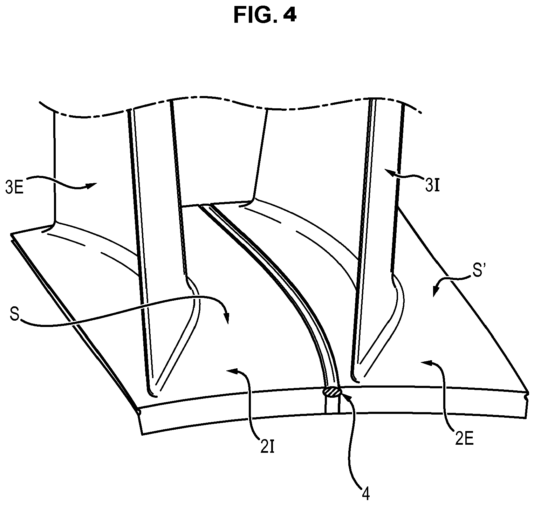

Un joint inter-plateforme protubérant de forme adaptée peut alors former l'ailette (comme on le voit sur la **figure 4****,** qui ne représente pas les autres ailettes 4).

Cette solution présente de nombreux avantages, car elle ne nécessite que peu de modifications par rapport aux pièces connues et peut faciliter le montage/démontage en permettant des jeux tangentiels plus grands entre les parties de plateforme 2.

Alternativement ou en complément, au moins une ailette 4 est inhérente à la surface S, et l'utilisation des courbes de construction PC permet de les définir (ce qui est également vrai dans le cas d'une unique ailette 4 si elle n'est pas obtenue par un joint). De façon préférée, au moins trois courbes de construction sont utilisées, comme on voit par exemple sur la figure 2, où il y en a sept : une courbe d'attaque (qui passe par le point d'attaque défini ci-avant), au moins une courbe centrale, et une courbe de fuite (qui passe par le point de fuite également défini ci-avant). La ou les courbes centrales (dont le nombre peut varier) sont avantageusement disposées à intervalles réguliers. La première et la dernière courbe centrale peuvent être disposées à la jonction entre le biseau et le corps d'une des ailettes 4. La courbe de fuite d'une ailette 4 peut être une courbe centrale d'une autre, et ainsi de suite.

On note que la courbe de fuite peut être par commodité confondue avec le plan de raccord PS (l'ailette 4 s'étend au-delà du bord de fuite). Au contraire, il peut y avoir d'autres courbes de construction disposées en amont ou en aval de toute ailette 4 (et donc ne contribuant pas à définir cette ou ces dernières).

Chacune courbe de construction PC est ainsi définie par une pluralité de points de contrôle (extrémaux et intermédiaires, au moins un point de contrôle intermédiaire (et même deux pour les courbes centrales) étant requis par ailette 4 pour chaque courbe de construction PC disposée entre la position d'attaque et la position de fuite d'une ailette 4). Le ou les paramètres définissant un point de contrôle sont choisis parmi une abscisse du point, une ordonnée du point, une orientation de tangente à la courbe au niveau du point et un (dans le cas d'un point de contrôle extrémal, on ne peut prendre en compte que la demi-tangente dans le domaine de définition de la courbe, à gauche ou à droite suivant le point) ou deux (dans le cas d'un point de contrôle intermédiaire) coefficients de tension chacun associé à une demi-tangente à la courbe au niveau du point.

Les positions des points de contrôle extrémaux sont contraintes par les pales 3I, 3E. En revanche, les orientations de la tangente à la courbe en ces points (en d'autres termes les dérivées) permettent de contrôler les pentes de la surface S, en particulier celles des flancs d'une ailette 4 (et donc sa largeur et sa hauteur)

### Modélisation de la surface

La définition de la surface via des courbes de construction PC facilite l'optimisation automatique de la pièce 1.

Chaque courbe de construction PC peut ainsi être modélisée via la mise en oeuvre d'étapes de :
(a) Paramétrisation de la courbe de construction PC en tant que courbe de classe C¹ représentant la valeur du rayon de ladite surface S en fonction d'une position entre l'intrados de la première pale 3I et l'extrados de la deuxième pale 3E, la courbe étant définie par :
   - Deux points de contrôle extrémaux, respectivement sur chacune des deux pales 3E, 3I entre lesquelles ladite surface S s'étend
   - Au moins un (avantageusement deux) point de contrôle intermédiaire situé entre les points de contrôle extrémaux ;
   - Au moins une spline ;
   la paramétrisation étant mise en oeuvre selon un ou plusieurs paramètres définissant au moins un des points de contrôle ;
(b) Détermination de valeurs optimisées desdits paramètres de ladite courbe.

Ces étapes sont réalisées par un équipement informatique comprenant des moyens de traitement de données (par exemple un supercalculateur).

Certains paramètres des points de contrôle extrémaux ou intermédiaires, par exemple les intervalles d'inclinaison des tangentes, sont fixés de sorte à respecter les conditions de pente recherchées.

De nombreux critères peuvent être choisis comme critères à optimiser lors de la modélisation de chaque courbe. A titre d'exemple, on peut tenter de maximiser des propriétés mécaniques telles que la résistance aux contraintes mécaniques, les réponses fréquentielles, les déplacements des pales 3E, 3I, des propriétés aérodynamiques telles que le rendement, l'élévation de pression, la capacité de débit ou la marge au pompage, etc.

Pour cela il est nécessaire de paramétriser la loi que l'on cherche à optimiser, c'est-à-dire d'en faire une fonction de N paramètres d'entrée. L'optimisation consiste alors à faire varier (en général aléatoirement) ces différents paramètres sous contrainte, jusqu'à déterminer leurs valeurs optimales pour un critère prédéterminé. Une courbe « lissée » est ensuite obtenue par interpolation à partir des points de passage déterminés.

Le nombre de calculs nécessaires est alors directement lié (linéairement voire exponentiellement) au nombre de paramètres d'entrée du problème.

De nombreuses méthodes sont connues, mais de façon préférée on mettra en oeuvre une méthode similaire à celle décrite dans la demande de brevet FR1353439, qui permet une excellente qualité de modélisation, sans consommation élevée de puissance de calcul, tout en limitant le phénomène de Runge (« ondulation » excessive de la surface).

Il est à noter que la pale 3E, 3I est reliée à la plateforme 2 via une courbe de raccordement, qui peut faire l'objet d'une modélisation spécifique, notamment également via l'utilisation de splines et points de contrôle utilisateur.

### Effet des ailettes

Les lignes de courant et de frottement ont été observées le long de l'extrados de la deuxième pale 2E : géométrie sans ailettes **(****figure 5a**), géométrie non-axisymétrique avec une ailette unique **(****figure 5b**) et géométrie non-axisymétrique avec deux ailettes **(****figure 5c**).

On voit nettement sur les figures 5b et surtout 5c la réduction de la hauteur de décollement, qui baisse de près de 33%. Le gain de vorticité atteint 2.3% pour une ailette, et 3.8% pour deux ailettes, d'où une hausse du rendement de quelques dixièmes de pourcent.

## Revendications

1. Pièce (1) ou ensemble de pièces de turbomachine comprenant au moins des première et deuxième pales (3I, 3E), et une plateforme (2) à partir de laquelle s'étendent les pales (3I, 3E) la plateforme (2) présentant entre l'intrados de la première pale (3I) et l'extrados de la deuxième pale (3E) une surface (S) non axisymétrique définissant une pluralité d'ailettes (4) s'étendant en aval d'un bord d'attaque (BA) de chacune des pales (3I, 3E), chaque ailette (4) étant associée à une position d'attaque et une position de fuite sur la surface (S), entre lesquelles l'ailette (4) s'étend, telles que plus une ailette (4) est éloignée de l'extrados de la deuxième pale (3E), plus la position d'attaque de ladite ailette (4) est axialement éloignée du bord d'attaque (BA) des pales (3I, 3E) ; **caractérisée en ce que** les ailettes (4) sont à section sensiblement triangulaire, ladite position d'attaque de chaque ailette (4) étant située à entre 5% et 35% de longueur relative d'une corde de pale (3I, 3E) s'étendant d'un bord d'attaque (BA) à un bord de fuite (BF) de la pale (3I, 3E) .

2. Pièce ou ensemble de pièces selon la revendication 1, dans laquelle chaque ailette (4) présente une largeur comprise entre 5% et 20% de la distance entre l'intrados de la première pale (3I) et l'extrados de la deuxième pale (3E).

3. Pièce ou ensemble de pièces selon l'une des revendications précédentes, dans laquelle chaque ailette (4) présente un ratio hauteur sur largeur compris entre 0.3 et 1.3.

4. Pièce ou ensemble de pièces selon l'une des revendications précédentes, dans laquelle chaque ailette (4) présente une hauteur croissante en parcourant l'ailette (4) de la position d'attaque à la position de fuite.

5. Pièce ou ensemble de pièces selon l'une des revendications précédentes, dans laquelle chaque ailette (4) présente une trace correspondant à la ligne moyenne de squelettes des première et deuxième pales (3I, 3E).

6. Pièce ou ensemble de pièces selon l'une des revendications précédentes, dans laquelle la position de fuite associée à chaque ailette (4) est située à entre 50% et 105% de longueur relative de ladite corde de pale (3I, 3E).

7. Pièce ou ensemble de pièces selon la revendication 6, dans laquelle les positions d'attaque et de fuite associées à chaque ailette (4) sont chacune situées à une distance de l'extrados de la deuxième pale (3E) comprise entre 10% et 55% de la distance entre l'intrados de la première pale (3I) et l'extrados de la deuxième pale (3E).

8. Pièce ou ensemble de pièces selon l'une des revendications précédentes, dans laquelle la surface (S) définit deux ou trois ailettes (4) côte à côte

9. Pièce ou ensemble de pièces selon l'une des revendications précédentes, dans laquelle la plateforme (2) comprend une première partie de plateforme (2I) à partir de laquelle s'étend la première pale (3I) et une deuxième partie de plateforme (2E) à partir de laquelle s'étend la deuxième pale (3E), un raccord entre lesdites première et deuxième parties de plateforme (2I, 2E) formant l'ailette (4).

10. Pièce ou ensemble de pièces selon l'une des revendications précédentes, dans laquelle la surface (S) est limitée par un premier et un deuxième plan extrémal (PS, PR), la surface (S) étant définie par au moins une courbe de construction (PC) de classe C1 représentant chacune la valeur d'un rayon de ladite surface (S) en fonction d'une position entre l'intrados de la première pale (3I) et l'extrados de la deuxième pale (3E) selon un plan sensiblement parallèle aux plans extrémaux (PS, PR) disposé entre la position d'attaque et la position de fuite de chaque ailette (4).

11. Pièce ou ensemble de pièces selon la revendication 10, pour laquelle chaque courbe de construction (PC) a été modélisée via la mise en oeuvre par des moyens de traitement de données d'étapes de :
(a) Paramétrisation de la courbe de construction (PC) en tant que courbe de classe C¹ représentant la valeur du rayon de ladite surface (S) en fonction d'une position entre l'intrados de la première pale (3I) et l'extrados de la deuxième pale (3E), la courbe étant définie par :
- Deux points de contrôle extrémaux, respectivement sur chacune des deux pales (3I, 3E) entre lesquelles ladite surface (S) s'étend ;
- Au moins un point de contrôle intermédiaire situé entre les points de contrôle extrémaux ;
- Au moins une spline ;
la paramétrisation étant mise en oeuvre selon un ou plusieurs paramètres définissant au moins un des points de contrôle ;
(b) Détermination de valeurs optimisées desdits paramètres de ladite courbe.

12. Pièce ou ensemble de pièces selon l'une des revendications précédentes, dans laquelle la plateforme (2) présente une forme annulaire le long de laquelle sont régulièrement disposées une pluralité de pales (3I, 3E).

13. Pièce ou ensemble de pièces selon la revendication 12, dans laquelle la plateforme (2) présente la même surface (S) non-axisymétrique entre chaque paire de pales (3I, 3E) consécutives.

14. Pièce ou ensemble de pièces selon la revendication 13, étant une roue à aubes ou un redresseur de compresseur.

15. Turbomachine comprenant une pièce (1) ou ensemble de pièces selon l'une des revendications précédentes.

## Patentansprüche

1. Strömungsmaschinenbauteil (1) oder Bauteilgruppe, umfassend mindestens eine erste und zweite Schaufel (3I, 3E) und eine Plattform (2), ab der sich die Schaufeln (3I, 3E) erstrecken
wobei die Plattform (2) zwischen der Laibung der ersten Schaufel (3I) und der Oberseite der zweiten Schaufel (3E) eine nicht achssymmetrische Fläche (S) aufweist, die eine Vielzahl von Rippen (4) definiert, die sich nach einer Anströmkante (BA) jeder der Schaufeln (3I, 3E) erstrecken, wobei jede Rippe (4) einer Anströmposition und einer Abströmposition auf der Fläche (S) zugeordnet ist, zwischen denen sich die Rippe (4) derart erstreckt, dass, je weiter eine Rippe (4) von der Oberseite der zweiten Schaufel (3E) entfernt ist, umso weiter die Anströmposition der Rippe (4) von der Anströmkante (BA) der Schaufeln (3I, 3E) axial entfernt ist;
**dadurch gekennzeichnet, dass** die Rippen (4) einen etwa dreieckigen Querschnitt haben, wobei sich die Anströmposition jeder Rippe (4) bei zwischen 5 % und 35 % der relativen Länge einer Sehne einer Schaufel (3I, 3E) befindet, die sich von einem Anströmrand (BA) zu einem Abströmrand (BF) der Schaufel (3I, 3E) erstreckt.

2. Bauteil oder Bauteilgruppe nach Anspruch 1, wobei jede Rippe (4) eine Breite zwischen 5 % und 20 % inklusive des Abstands zwischen der Laibung der ersten Schaufel (3I) und der Oberseite der zweiten Schaufel (3E) aufweist.

3. Bauteil oder Bauteilgruppe nach einem der vorangehenden Ansprüche, wobei jede Rippe (4) ein Verhältnis Höhe zu Breite zwischen 0,3 und 1,3 inklusive aufweist.

4. Bauteil oder Bauteilgruppe nach einem der vorangehenden Ansprüche, wobei jede Rippe (4) eine bei Durchquerung der Rippe (4) von der Anströmposition zu der Abströmposition zunehmende Höhe aufweist.

5. Bauteil oder Bauteilgruppe nach einem der vorangehenden Ansprüche, wobei jede Rippe (4) einen Verlauf aufweist, der der Skelettmittellinie der ersten und zweiten Schaufel (3I, 3E) entspricht.

6. Bauteil oder Bauteilgruppe nach einem der vorangehenden Ansprüche, wobei sich die jeder Rippe (4) zugeordnete Abströmposition bei zwischen 50 % und 105 % relativer Länge der Sehne der Schaufel (3I, 3E) befindet.

7. Bauteil oder Bauteilgruppe nach Anspruch 6, wobei sich die jeder Rippe (4) zugeordnete Anström- und Abströmposition in einem Abstand von der Oberseite der zweiten Schaufel (3E) bei zwischen 10 % und 55 % inklusive des Abstands zwischen der Laibung der ersten Schaufel (3I) und der Oberseite der zweiten Schaufel (3E) befindet.

8. Bauteil oder Bauteilgruppe nach einem der vorangehenden Ansprüche, wobei die Fläche (S) zwei oder drei Rippen (4) nebeneinander definiert.

9. Bauteil oder Bauteilgruppe nach einem der vorangehenden Ansprüche, wobei die Plattform (2) einen ersten Plattformteil (2I), ab dem sich die erste Schaufel (3I) erstreckt, und einen zweiten Plattformteil (2E), ab dem sich die zweite Schaufel (3E) erstreckt, umfasst, wobei eine Verbindung zwischen dem ersten und zweiten Plattformteil (2I, 2E) die Rippe (4) bildet.

10. Bauteil oder Bauteilgruppe nach einem der vorangehenden Ansprüche, wobei die Fläche (S) von einer ersten und einer zweiten Endebene (PS, PR) begrenzt ist, wobei die Fläche (S) von mindestens einer Konstruktionskurve (PC) der Klasse C1 definiert ist, die jeweils den Wert eines Radius der Fläche (S) in Abhängigkeit von einer Position zwischen der Laibung der ersten Schaufel (3I) und der Oberseite der zweiten Schaufel (3E) gemäß einer zu den Endebenen (PS, PR) etwa parallelen Ebene, angeordnet zwischen der Anströmposition und der Abströmposition jeder Rippe (4), darstellt.

11. Bauteil oder Bauteilgruppe nach Anspruch 10, wobei jede Konstruktionskurve (PC) anhand der Umsetzung durch Datenverarbeitungsmittel folgender Schritte modelliert wurde:
(a) Parametrieren der Konstruktionskurve (PC) als Kurve der Klasse C¹, die den Wert des Radius der Fläche (S) in Abhängigkeit von einer Position zwischen der Laibung der ersten Schaufel (3I) und der Oberseite der zweiten Schaufel (3E) darstellt, wobei die Kurve definiert ist von:
- zwei Endkontrollpunkten jeweils auf jeder der zwei Schaufeln (3I, 3E), zwischen denen sich die Fläche (S) erstreckt;
- mindestens einem Zwischenkontrollpunkt, der sich zwischen den Endkontrollpunkten befindet;
- mindestens einem Spline;
wobei die Parametrierung gemäß einem oder mehreren Parametern durchgeführt wird, die mindestens einen der Kontrollpunkte definieren;
(b) Bestimmen der optimierten Werte der Parameter der Kurve.

12. Bauteil oder Bauteilgruppe nach einem der vorangehenden Ansprüche, wobei die Plattform (2) eine Ringform aufweist, entlang der eine Vielzahl von Schaufeln (3I, 3E) gleichmäßig angeordnet ist.

13. Bauteil oder Bauteilgruppe nach Anspruch 12, wobei die Plattform (2) zwischen jedem Paar aufeinanderfolgender Schaufeln (3I, 3E) dieselbe nicht achssymmetrische Fläche (S) aufweist.

14. Bauteil oder Bauteilgruppe nach Anspruch 13, darstellend ein Schaufelrad oder eine Verdichter-Leitschaufel.

15. Strömungsmaschine, umfassend ein Bauteil (1) oder Bauteilgruppe nach einem der vorangehenden Ansprüche.

## Claims

1. A part (1) or set of parts of a turbomachine comprising at least first and second blades (3I, 3E), and a platform (2) from which the blades (3I, 3E) extend
the platform (2) having between the intrados of the first blade (31) and the extrados of the second blade (3E), a non-axisymmetric surface (S) defining a plurality of fins (4) extending downstream of a leading edge (BA) of each of the blades (3I, 3E), each fin (4) being associated with a leading position and a trailing position on the surface (S) between which the fin (4) extends, such that the more a fin (4) is separated from the extrados of the second blade (3E), the more the leading position of said fin (4) is axially separated from the leading edge (BA) of the blades (3I, 3E);
**characterized in that** the fins (4) have a substantially triangular section, said leading position of each fin (4) being located at between 5% and 35% of the relative length of a blade chord (3I, 3E) extending from a leading edge (BA) to a trailing edge (BF) of the blade (3I, 3E).

2. The part or set of parts according to claim 1, wherein each fin (4) has a width comprised between 5% and 20% of the distance between the intrados of the first blade (31) and the extrados of the second blade (3E) .

3. The part or set of parts according to one of the preceding claims, wherein each fin (4) has a height to width ratio comprised between 0.3 and 1.3.

4. The part or set of parts according to one of the preceding claims, wherein each fin (4) has a height that increases along the fin (4) from the leading position to the trailing position.

5. The part or set of parts according to one of the preceding claims, wherein each fin (4) has a track corresponding to the median-camber line of the first and second blades (3I, 3E).

6. The part or set of parts according to one of the preceding claims, wherein the trailing position associated with each fin (4) is located at between 50% and 105% of the relative length of said blade chord (3I, 3E).

7. The part or set of parts according to claim 6, wherein the leading and trailing positions associated with each fin (4) are each located at a distance from the extrados of the second blade (3E) comprised between 10% and 55% of the distance between the intrados of the first blade (31) and the extrados of the second blade (3E) .

8. The part or set of parts according to one of the preceding claims, wherein the surface (S) defines two or three fins (4) side by side.

9. The part or set of parts according to one of the preceding claims, wherein the platform (2) comprises a first platform portion (21) from which the first blade (31) extends and a second platform portion (2E) from which the second blade (3E) extends, a connection between said first and second platform portions (2I, 2E) forming the fin (4).

10. The part or set of parts according to one of the preceding claims, wherein the surface (S) is limited by a first and a second end plane (PS, PR), the surface (S) being defined by at least one class C¹ construction curve (PC) each representing the value of a radius of said surface (S) as a function of a position between the intrados of the first blade (31) and the extrados of the second blade (3E) along a plane substantially parallel to the end planes (PS, PR) positioned between the leading position and the trailing position of each fin (4).

11. The part or set of parts according to claim 10, for which each construction curve (PC) has been modeled by implementing, via data processing means, steps of:
(a) Parameterization of the construction curve (PC) as a class C¹ curve representing the value of the radius of said surface (S) as a function of a position between the intrados of the first blade (31) and the extrados of the second blade (3E), the curve being defined by:
- Two end control points, respectively on each of the two blades (3I, 3E) between which said surface (S) extends;
- At least one intermediate control point located between the end control points;
- At least one spline;
the parameterization being implemented according to one or more parameters defining at least one of the control points;
(b) Determination of optimized values of said parameters of said curve.

12. The part or set of parts according to one of the preceding claims, wherein the platform (2) has an annular shape along which are regularly positioned a plurality of blades (3I, 3E).

13. The part or set of parts according to claim 12, wherein the platform (2) has the same non-axisymmetric surface (S) between each consecutive pair of blades (3I, 3E).

14. The part or set of parts according to Claim 13, being a bladed disk or a compressor stator stage.

15. A turbomachine comprising a part (1) or set of parts according to one of the preceding claims.
